(19) **Europäisches Patentamt European Patent Office Office européen des brevets**

(11) **EP 3 767 274 B1**

(12) **FASCICULE DE BREVET EUROPEEN**

(45) Date de publication et mention
de la délivrance du brevet:
**12.02.2025 Bulletin 2025/07**

(21) Numéro de dépôt: **20186182.0**

(22) Date de dépôt: **16.07.2020**

(51) Classification Internationale des Brevets (IPC):
**G01N 11/10** (2006.01)     **G01N 33/38** (2006.01)

(52) Classification Coopérative des Brevets (CPC):
**G01N 11/10; B28C 5/422; B28C 7/024;**
G01N 2011/0046

(54) **DISPOSITIF ET PROCÉDÉ POUR DÉTERMINER UN VOLUME, UNE VARIATION DE COMPOSITION ET DES CARACTÉRISTIQUES RHÉOLOGIQUES D'UNE SUBSTANCE**

**VORRICHTUNG UND VERFAHREN ZUM BESTIMMEN EINES VOLUMENS, EINER VERÄNDERUNG DER ZUSAMMENSETZUNG UND DER RHEOLOGISCHEN EIGENSCHAFTEN EINER SUBSTANZ**

**DEVICE AND METHOD FOR DETERMINING A VOLUME, A VARIATION IN COMPOSITION AND RHEOLOGICAL CHARACTERISTICS OF A SUBSTANCE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2019 FR 1908175**

(43) Date de publication de la demande:
**20.01.2021 Bulletin 2021/03**

(73) Titulaire: **EQIOM
92593 Levallois Peret Cedex (FR)**

(72) Inventeurs:
• **NIVESSE, Régis
92593 LEVALLOIS-PERRET CEDEX (FR)**
• **FABBRIS, Faber
92593 LEVALLOIS-PERRET CEDEX (FR)**
• **CREMOUX, Guillaume
92593 LEVALLOIS-PERRET CEDEX (FR)**

(74) Mandataire: **Cabinet Boettcher et al
5, rue de Vienne
75008 Paris (FR)**

(56) Documents cités:
**WO-A1-2016/023119     US-A1- 2017 108 421**

**Description**

La présente invention concerne la fabrication et le transport d'une composition à base de liant hydraulique telle qu'un béton. L'invention vise plus particulièrement à déterminer un volume, une variation de composition et des caractéristiques rhéologiques de la composition mélangée à l'intérieur d'un récipient entraîné en rotation.

ARRIERE PLAN DE L'INVENTION

L'évolution des techniques de fabrication du béton et des modes de construction a engendré l'utilisation de béton de plus en plus fluides, notamment grâce à l'avènement de superplastifiants de type polycarboxylate-polyacrylate qui permettent de réduire le dosage en eau.

Les avantages procurés par de tels bétons sont nombreux et connus en soi : réduction des coûts énergétiques de fabrication et de mise en œuvre, rapidité des opérations de coulage, meilleure durabilité des ouvrages de par l'utilisation de ratio eau/ciments plus faibles pour une consistance donnée, moindre pénibilité pour les opérateurs...

Plusieurs tests existent pour déterminer la consistance d'un béton. Le plus connu est l'affaissement au cône d'Abrams qui consiste à démouler le béton contenu a l'intérieur d'un cône tronqué et à mesurer la variation de hauteur du corps d'épreuve avant/après démoulage (affaissement). Plus l'affaissement est important, plus le béton est considéré fluide. Pour les bétons très fluides (bétons dits auto-plaçants ou BAP), la mesure de l'affaissement peut se révéler insuffisante : on procède alors à la mesure du diamètre du corps d'épreuve après démoulage (étalement). Un autre test, appelé V-funnel, consiste à évaluer la vitesse d'écoulement d'une quantité prédéterminée de béton passant à travers l'orifice d'un entonnoir en V, par la mesure du temps d'écoulement. Ce dernier essai ne peut qu'être appliqué aux bétons très fluides.

Néanmoins, les résultats de ces tests dépendant de nombreux paramètres propres aux essais eux-mêmes (dimensions des appareils d'essai, procédé d'exécution...), leur représentativité s'en trouve limitée (ils ne mesurent pas une grandeur physique propre au matériau testé, mais apprécient, par le biais d'une information synthétique, l'effet combiné de plusieurs grandeurs physiques). Ces tests (essais technologiques) visent à apprécier le comportement à l'écoulement du béton, mais ne permettent pas de déterminer le comportement physique intrinsèque d'un béton, notamment du point de vue de la science de l'écoulement (comportement rhéologique).

La détermination de ce comportement est réalisée avec un rhéomètre, appareil qui permet de caractériser la déformation par écoulement d'un béton en réponse à une contrainte appliquée (ou vice-versa, mesurer la contrainte résistante exercée par le fluide contre une déformation par écoulement donnée).

La mesure rhéologique, tout autant que la réalisation des essais technologiques, requiert d'autre part le confinement du béton à caractériser dans un récipient immobile par rapport au sol (mesures statiques). Elles présupposent donc l'extraction d'une partie du béton depuis les dispositifs de fabrication (malaxeur) ou de transport (camion toupie), ce qui interrompt la livraison du béton et limite le nombre de mesures pendant le cycle de fabrication et de distribution dudit béton. Les mesures statiques présentent en outre la limite de caractériser un matériau initialement au repos (dans des conditions différentes, donc, de celles à l'intérieur du malaxeur où il est en agitation continue).

Le document US 2017/108421 divulgue un dispositif pour caractériser une substance mélangée à l'intérieur d'un récipient de telle manière que la substance soit en mouvement relatif de rotation par rapport au récipient. Le dispositif comprend un capteur d'effort qui est recouvert d'un capot de protection fixé à une embase du capteur d'effort par un axe d'articulation. Le déplacement de la partie supérieure du capot de protection est transmis au capteur d'effort via un boulon formant une connexion par butée.

OBJET DE L'INVENTION

L'invention a donc pour but de proposer un dispositif et un procédé afin de caractériser une substance permettant de dépasser au moins en partie les limites précitées, et notamment de ne pas être limité à des mesures statiques. Par « caractériser », on entend déterminer une quantité et/ou une variation de composition et/ou une ou plusieurs caractéristiques de la substance.

RESUME DE L'INVENTION

A cet effet, l'invention propose un dispositif pour caractériser une substance mélangée à l'intérieur d'un récipient de telle manière que la substance soit mobile en rotation par rapport au récipient, le dispositif comprenant :

- un capteur d'effort fixé à une paroi du récipient, le capteur s'étendant à l'intérieur dudit récipient selon un axe sensiblement normal à ladite paroi ;
- un capot de protection recouvrant le capteur ;
- des moyens d'enregistrement et de traitement d'un signal délivré par le capteur, agencés pour déterminer, à partir du signal, un volume et/ou une variation de composition et/ou au moins une caractéristique rhéologique de la substance ; et
- des moyens de transmission du signal délivré par le capteur aux moyens d'enregistrement et de traitement.

Le capot de protection est fixé exclusivement et de manière immobile à une extrémité libre du capteur de façon à ce que, lors du mouvement relatif de la substance par rapport au récipient, le capot soit soumis à une pression de résistance conférée par la substance et à ce que la pression de résistance soit concentré sur l'extrémité libre du capteur.

L'invention permet de caractériser la substance à partir du signal fourni par le capteur. La variation de composition peut résulter par exemple d'un rajout d'eau, d'adjuvant ou de fibres dans le béton.

De manière particulière, la substance mélangée est un béton.

De manière particulière, la caractéristique rhéologique est le seuil d'écoulement et/ou la viscosité.

De manière particulière, les moyens de transmission du signal comprennent un système de connexion sans fil ou radio.

L'invention concerne également un procédé pour caractériser une substance mélangée à l'intérieur d'un récipient mobile en rotation à partir d'un tel dispositif. Le procédé comprend les étapes suivantes :

-   enregistrer un signal délivré par le capteur lors de rotations du récipient ; et
-   déterminer un volume et/ou une variation de composition et/ou au moins une caractéristique rhéologique de la substance exclusivement à partir du signal.

De manière particulière, la détermination du volume, de la variation de composition et de la caractéristique rhéologique de la substance comprend un redressement du signal brut délivré par le capteur en soustrayant audit signal brut un signal de base correspondant aux fluctuations d'effort auxquelles est soumis le capteur sous l'effet de son propre poids lorsque le récipient tourne.

Selon un mode de réalisation particulier de l'invention, le signal de base est déterminé en enregistrant et en analysant le signal délivré par le capteur lorsque la toupie tourne à vide.

Selon un autre mode de réalisation de l'invention, le signal de base est déterminé à partir du signal brut.

Selon une caractéristique particulière, la détermination du volume est déterminée à partir d'un angle de présence de la substance.

De manière particulière, l'angle de présence est déterminé à partir du signal redressé ou du signal brut.

Avantageusement, l'angle de présence est déterminé à partir d'un temps de présence du béton extrait du signal redressé ou du signal brut.

Selon une autre caractéristique particulière, la variation de composition est déterminée en comparant une valeur équivalente du signal redressé sur une période donnée à une valeur équivalente du signal redressé sur une période consécutive à la période donnée.

Selon une autre caractéristique particulière, la caractéristique rhéologique de la substance est déterminée en associant, pour un volume de substance donné et pour au moins deux valeurs $\omega_i$ de vitesse de rotation du récipient ainsi que des valeurs $Seqi$ du signal équivalent correspondant, aux couples $(\omega_i, Seqi)$ des couples ($grad\ v_i, \tau_i$), où $grad\ v_i$ est le gradient de vitesse et $\tau_i$ la contrainte de cisaillement.

Avantageusement, la caractéristique rhéologique est une viscosité de la substance

Avantageusement encore, la caractéristique rhéologique est un seuil d'écoulement de la substance.

BREVE DESCRIPTION DES DESSINS

L'invention sera mieux comprise à la lumière de la description qui suit, laquelle est purement illustrative et non limitative, et doit être lue en regard des dessins annexés, parmi lesquels :

-   [Fig.1] la figure 1 est une vue de côté d'un camion toupie équipé d'un dispositif selon un mode de réalisation particulier de l'invention ;
-   [Fig.2] la figure 2 est une vue en coupe partielle du camion toupie illustré à la figure 1 selon un plan II-II orthogonal à un axe de rotation de la toupie et passant par un axe longitudinal du dispositif ;
-   [Fig.3] la figure 3 est une vue en coupe détaillée du dispositif illustré à la figure 2 ;
-   [Fig.4] la figure 4 représente, sur un même graphique, un signal brut envoyé par un capteur du dispositif et un signal de base dudit capteur ;
-   [Fig.5] la figure 5 représente un signal redressé correspondant aux signaux illustrés à la figure 4 ;
-   [Fig.6] la figure 6 représente une corrélation expérimentale établie entre un angle de présence du capteur et un volume de béton ;
-   [Fig.7] la figure 7 représente une corrélation établie entre un gradient de vitesse $grad\ v_i$ et une contrainte de cisaillement $\tau_i$;
-   [Fig.8] la figure 8 représente, pour différents bétons, des valeurs rhéologiques $\tau_i, \mu$ expérimentales et des valeurs mesurées correspondantes.

DESCRIPTION DETAILLEE DE L'INVENTION

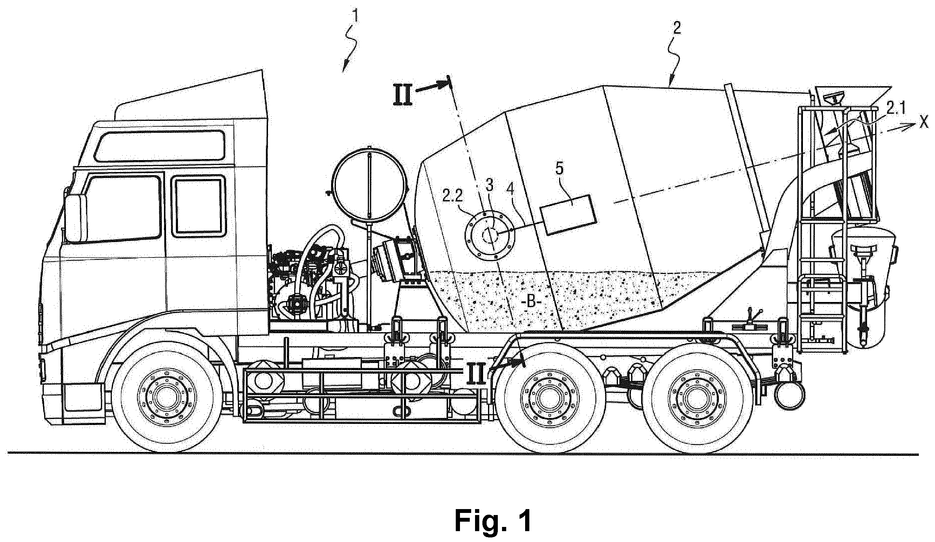

En référence à la figure 1, un camion 1 toupie, autrement appelé camion malaxeur, comprend de façon connue en soi une toupie 2 tournante formant un récipient pour contenir et mélanger un béton B. La toupie 2, disposée dans la longueur du camion 1, présente un axe de rotation X avantageusement incliné vers l'avant du camion 1 et comprend un orifice de sortie 2.1 agencé à l'arrière du camion 1.

Pendant le transport du béton vers un lieu de déversement, la toupie 2 tourne dans un premier sens autour de l'axe de rotation X afin d'effectuer un brassage du béton B et d'empêcher sa ségrégation dans ladite toupie 2. Une cloison hélicoïdale est prévue pour pousser le béton B vers un fond de la toupie 2 opposé à l'orifice de sortie 2.1 afin de le brasser et de l'éloigner dudit orifice de sortie 2.1.

Lors du déversement du béton B, la toupie 2 tourne autour de l'axe de rotation X dans le sens opposé à celui lors de son transport, la cloison hélicoïdale poussant alors le béton B vers l'orifice de sortie 2.1.

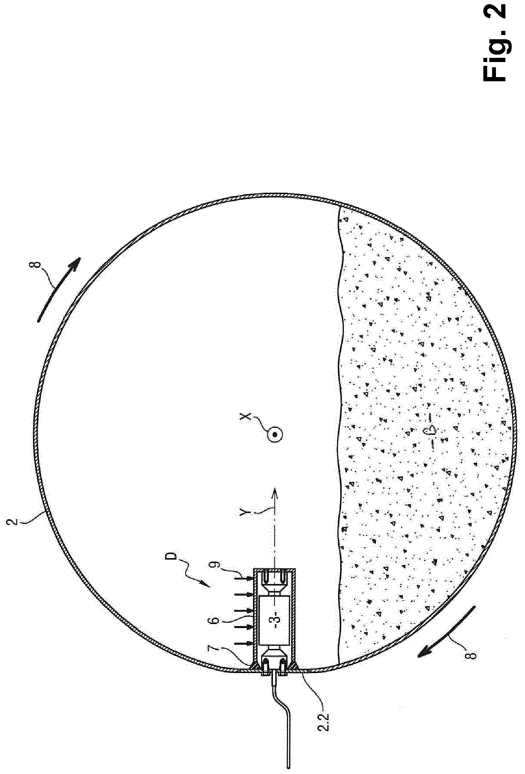

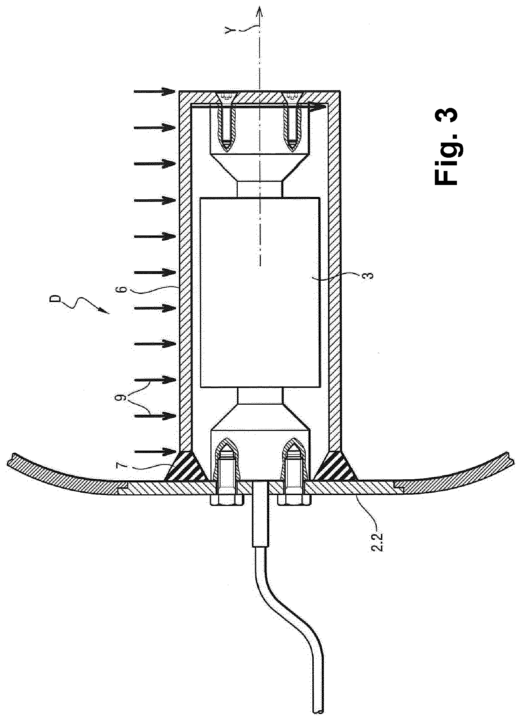

Comme illustré aux figures 2 et 3, le camion est équipé d'un dispositif D selon un mode de réalisation particulier de l'invention pour déterminer un volume, une variation de composition et des caractéristiques rhéologiques du béton B. Le dispositif D comprend un capteur 3 d'effort comportant un barreau d'environ 15 cm de longueur, élastiquement déformable pourvu d'au moins une jauge de contrainte (basée sur le principe du pont de Wheatstone). Une extrémité du barreau du capteur 3 est fixée par vissage à une paroi 2.2 de la toupie 2 pour former une liaison encastrement et pour que le barreau s'étende à l'intérieur de la toupie 2 selon un axe Y sensiblement normal à la paroi 2.2, soit sensiblement radial par rapport à l'axe de rotation X de la toupie 2. Avantageusement, le capteur 3 est ici monté sur une porte d'inspection de la toupie 2, notamment pour faciliter la maintenance du capteur 3 qui peut ainsi être aisément sorti de la toupie 2.

Une connexion filaire 4 relie le capteur 3 à un système 5 d'enregistrement et de traitement de signal. Le système 5 comprend une unité électronique comportant un processeur et une mémoire contenant un programme ayant des instructions agencées pour analyser un signal Sb brut délivré par le capteur 3 via la connexion filaire 4. Les informations issues de l'enregistrement et du traitement du signal Sb sont ici transmises en temps réel à une unité d'affichage embarquée (non représentée ici) de préférence par une liaison non filaire.

Un capot 6 de protection recouvre le capteur 3. Le capot 6 comprend une paroi tubulaire ayant une extrémité ouverte voisine de la paroi 2.2 et une extrémité fermée par une cloison transversale fixée exclusivement et de manière immobile, c'est-à-dire pour assurer une liaison de type encastrement, à une extrémité libre dudit capteur 3 par vissage de façon à reporter la résultante des forces F s'exerçant sur la paroi tubulaire du capot 6, sur l'extrémité libre du barreau du capteur 3.

Un joint d'étanchéité 7 s'étend autour de l'extrémité ouverte du capot 6 pour assurer une étanchéité entre le capot 6 et la paroi 2.2 de la toupie 2 en assurant ainsi l'inaccessibilité du béton B au capteur 3. Le joint d'étanchéité 7 ne doit pas empêcher les mouvements du capot 6. Le joint d'étanchéité 7 est constitué, par exemple, par une bordure polymérisante in situ, par un joint plat ou par un joint sans contact de manière à rendre négligeables la résistance du joint aux mouvements du capot 6.

En service, le capteur 3 équipé du capot 6 tourne avec la toupie 2 dans le sens de rotation indiqué par la flèche 8 ou dans le sens opposé, selon que la toupie 2 mélange ou évacue le béton B. Dans les deux cas, le béton B reste en partie basse de la toupie 2 en raison de l'action de la gravité.

Le capteur 3 est ainsi immergé dans le béton B à chaque rotation de la toupie 2 et se déplace par rapport au béton B. Le béton B exerce alors, sur toute une longueur du capot 6, une pression de résistance représentée schématiquement avec des flèches 9 opposées au mouvement de rotation du capteur 3. Le capteur 3 permet ainsi de mesurer directement la force exercée par le béton B sur le capot 6 et envoyer le signal Sb brut correspondant.

Le système 5 d'enregistrement et de traitement de signal utilise alors le signal Sb brut pour déterminer le volume, des caractéristiques rhéologiques et la variation éventuelle de composition du béton B contenu dans la toupie 2.

Pour cela, le système 5 d'enregistrement et de traitement de signal effectue tout d'abord un redressement du signal Sb brut envoyé par le capteur 3 en soustrayant audit signal Sb brut un signal b sinusoïdal dit de base correspondant aux fluctuations d'effort auxquelles est soumis le capteur 3 sous l'effet de son propre poids lors de la rotation de la toupie 2.

Le signal Sr redressé, le signal Sb brut et le signal b de base sont liés par la relation suivante :

$$Sr(t) = Sb(t) - b(t)$$

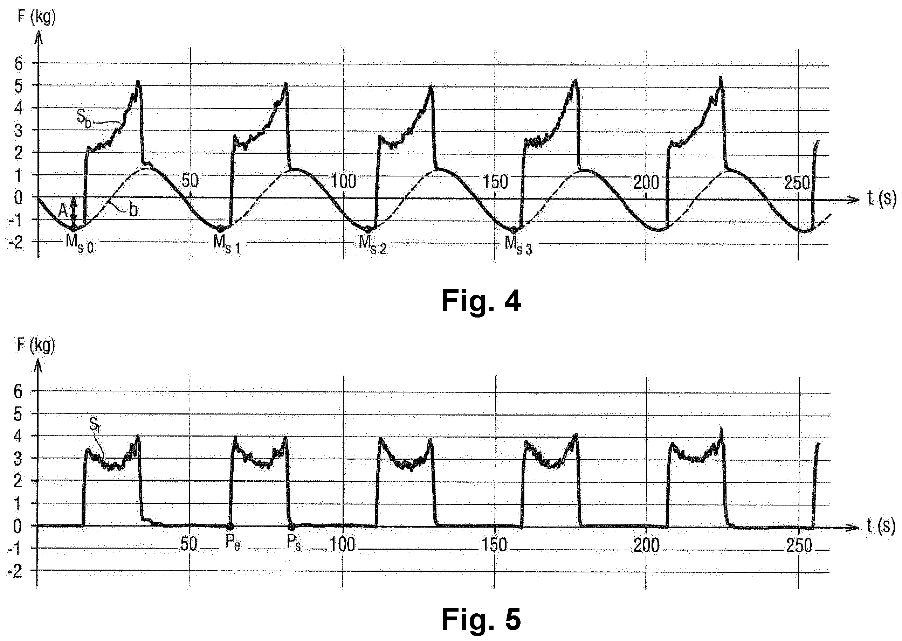

Un exemple de signal Sb brut et de signal b de base est illustré à la figure 4. Le signal Sr redressé correspondant est illustré à la figure 5.

Le signal Sb brut est caractérisé par une évolution sensiblement périodique de période T selon la relation :

$$Sr(t) \simeq Sr(t + T)$$

Le signal b de base peut être décrit selon l'équation :

$$b(t) = A\,sin(\omega t + \varphi)$$

dans laquelle A représente l'amplitude du signal, $\omega$ la pulsation et $\varphi$ la phase à l'origine.

Les valeurs A, $\omega$ et $\varphi$ peuvent notamment être déterminées, de façon connue en soi, en enregistrant et analysant le signal délivré par le capteur 3 lorsque la toupie 2 tourne à vide, autrement dit sans béton, autour de son axe de rotation X. Ceci peut être réalisé lors d'une phase de cali-bration réalisée soit en usine soit en exploitation lorsque la toupie 2 est vide.

Une solution alternative consiste à déterminer les valeurs A, $\omega$ et $\varphi$ à partir du signal Sb brut. Le système 5 d'enregistrement et de traitement de signal permet notamment d'accéder, sur une étendue temporelle prédéterminée, à une fréquence f moyenne du signal Sb

brut. La fréquence $f$ moyenne peut, par exemple, être calculée par une analyse des discontinuités d'une dérivée numérique ou d'une transformation de Fourier du signal $Sb$ brut. La fréquence $f$ moyenne du signal Sb brut coïncidant avec celle du signal $b$ de base, la pulsation $\omega$ peut donc être déterminée à partir de l'équation :

$$\omega = 2\pi f = \frac{2\pi}{T}$$

Par ailleurs, le système 5 d'enregistrement et de traitement de signal permet également d'accéder à la phase $\varphi$ et à l'amplitude $A$, notamment par un repérage d'un point $M_{si}$ du signal $Sb$ brut de cordonnées $t_{Msi}$, $Sb_{Msi}$ correspondant à un mininum du signal $Sb$ brut selon les relations :

$$\varphi = \pi\left(\frac{3}{2} - \frac{2t_{Msi}}{T}\right) \quad \text{et} \quad A = Sb_{Msi}$$

La détermination de l'amplitude $A$, de la pulsation $\omega$ et de la phase $\varphi$ du signal b de base est effectuée sur au moins deux rotations complètes de la toupie 2, et de préférence sur au moins cinq rotations complètes pour pouvoir avoir une détermination quasi-instantanée du signal $Sr$ redressé.

Le signal $Sr$ redressé est caractérisé, sur une période T donnée, par la présence de deux variations brusques correspondant à une entrée $Pe$ du capteur 3 dans le béton B et à une sortie $Ps$ du capteur 3 du béton B.

A partir du signal $Sr$ redressé, le système 5 d'enregistrement et de traitement de signal détermine un angle $\alpha_p$ de présence du béton B correspondant sensiblement à l'amplitude angulaire pendant laquelle le capteur 3 est immergé dans ledit béton B.

L'angle $\alpha_p$ de présence peut notamment être déterminé à partir d'un temps de présence $T_p$ correspondant sensiblement à la durée pendant laquelle le capteur 3 est immergé dans le béton B, selon les formules :

$$\alpha_p = 2\pi\frac{T_p}{T} \quad \text{et} \quad T_p = t_s - t_e$$

où $t_s$ et $t_e$ sont les valeurs de temps respectivement associées aux variations brusques $Ps$ et $Pe$.

L'angle $\alpha_p$ de présence peut également être déterminé en transformant les coordonnées temporelles $t_s$ et $t_e$ en coordonnées angulaires selon la relation :

$$\alpha_p = \alpha_e - \alpha_s$$

avec

$$\alpha_e = \omega t_e + \varphi$$

$$\alpha_s = \omega t_s + \varphi$$

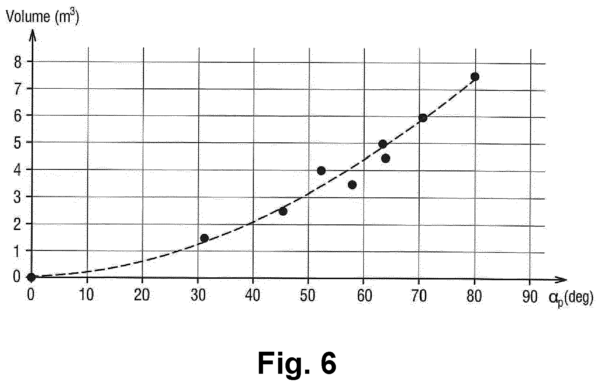

A partir de l'angle $\alpha_p$ de présence, le système 5 d'enregistrement et de traitement de signal détermine le volume de béton B contenu dans la toupie 2 par le biais d'une corrélation expérimentale préalablement établie entre l'angle $\alpha_p$ de présence et le volume de béton B, comme par exemple celle illustrée à la figure 6.

De façon simultanée, le système 5 d'enregistrement et de traitement de signal détermine également, à partir du signal $S_r$ redressé, une variation de la composition du béton.

Pour cela, le système 5 d'enregistrement et de traitement du signal associe sur une ou plusieurs périodes consécutives, une valeur scalaire unique $S_{eq}$ appelée signal équivalent. Le signal $S_{eq}$ équivalent peut être notamment une moyenne du signal $S_r$ redressé sur la ou les périodes considérées, une moyenne du signal $S_r$ redressé en valeur absolue, mais aussi la valeur $S_r(t_e)$ du signal $S_r$ redressé à l'instant $t_e$ ou la valeur $S_r(t_i)$ du signal $S_r$ redressé à l'instant $t_i$, ou bien encore la moyenne des valeurs $S_r(t_e)$ et $S_r(t_i)$.

Puis, le système 5 d'enregistrement de traitement de signal compare une valeur $S_{eq}(t)$ du signal équivalent d'une période donnée à une valeur $S_{eq}(t+nT)$ du signal équivalent d'une période consécutive à la période donnée en vérifiant la condition suivante :

$$\left| \overline{S_{eq}(t+nT)} - \overline{S_{eq}(t)} \right| < m$$

dans laquelle m est un coefficient de sensibilité strictement supérieur à 0 pouvant être déterminé expérimentalement pour fixer la variation considérée tolérable, et $n$ un nombre entier positif pouvant être choisie en fonction de la sensibilité admise.

Un non-respect de la condition signifie une variation soudaine de la composition du béton à un instant t. On notera qu'à partir d'une corrélation expérimentale préalablement établie entre la variation du signal $S_{eq}$ équivalent et la masse ou le volume des subsistances ajoutées, le système 5 d'enregistrement et de traitement de signal peut également déterminer une quantité d'eau, d'adjuvant ou de fibre rajoutée accidentellement ou intentionnellement au béton B.

De façon simultanée, le système 5 d'enregistrement et de traitement du signal détermine également, à partir du signal $S_r$ redressé, des caractéristiques rhéologiques du béton B.

Pour cela, le système 5 d'enregistrement et de traitement de signal associe univoquement, pour un volume de béton donné et pour au moins deux valeurs $\omega 1$, $\omega 2$ de vitesse de rotation de la toupie 2 ainsi que les valeurs $S_{eq}1$, $S_{eq}2$ du signal $S_{eq}$ équivalent correspondant, aux couples $(\omega_i, S_{eqi})$ des couples $(grad\ v_i, \tau_i)$, où $grad\ v_i$ est un gradient de vitesse et $\tau_i$ est une contrainte de cisaillement. Les couples $(grad\ v_i, \tau_i)$ peuvent être

déterminés par calcul ou par le biais d'une corrélation expérimentale préalablement établie entre les couples de grandeurs, par exemple par mesure sur rhéomètre rotationnel.

Le système 5 d'enregistrement et de traitement de signal détermine alors, à partir d'au moins deux couples $(grad\ v_i, \tau_i)$, des caractéristiques rhéologiques du béton B, comme par exemple une viscosité $\mu$ et un seuil d'écoulement $\tau_0$ du béton B, et plus généralement des paramètres correspondant à une modélisation quelconque du comportement rhéologique du béton B basé sur des couples de valeurs $(grad\ v_i, \tau_i)$.

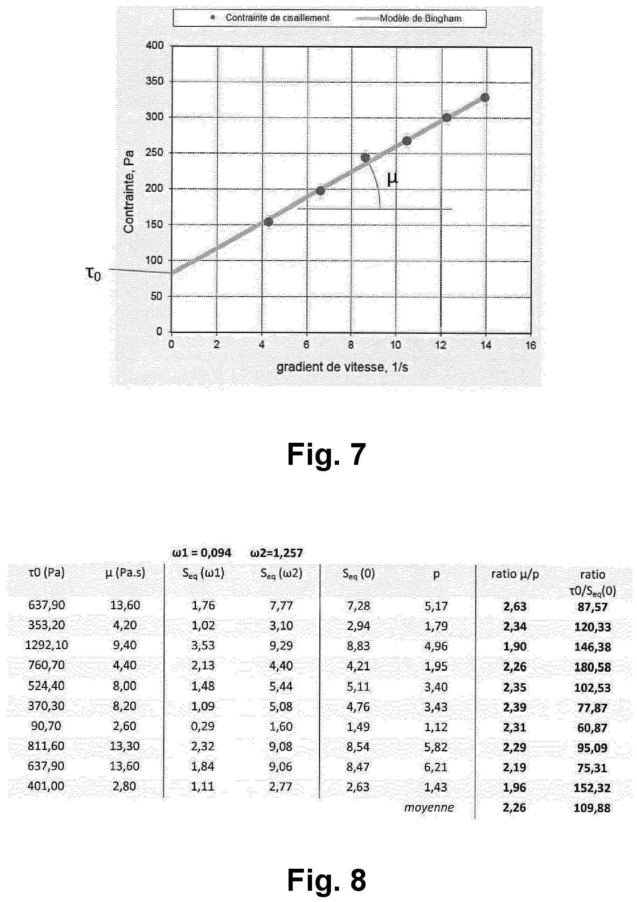

Par exemple, la relation de dépendance entre le gradient de vitesse $grad\ v_i$ et la contrainte de cisaillement $\tau_i$ étant linéaire, le système 5 d'enregistrement et de traitement de signal détermine la viscosité $\mu$ et le seuil d'écoulement $\tau_0$ de la substance B à partir d'une régression linéaire des couples $(grad\ v_i, \tau_i)$, comme par exemple celle illustrée à la figure 7. La viscosité $\mu$ est sensiblement égale au coefficient de corrélation de ladite régression linéaire représente et le seuil d'écoulement $\tau_0$, à la valeur de la contrainte de cisaillement $\tau_i$ lorsque le gradient de vitesse $grad\ v_i$ est nul.

La relation de dépendance entre la vitesse de rotation $\omega_i$ de la toupie 2 et la valeur $S_{eqi}$ du signal $S_{eq}$ équivalent étant elle aussi linéaire, une solution alternative consiste à collecter des couples $(\tau_0, \mu)$ de valeurs expérimentales de différents bétons et à mesurer, pour chacun des différents bétons, des couples $(\omega_i, S_{eqi})$ pour deux valeurs $\omega1, \omega2$ de vitesse de rotation de la toupie 2. Le système 5 d'enregistrement et de traitement de signal détermine alors par régression linéaire des couples $(S_{eq}(0),p)$ où $S_{eq}(0)$ est la valeur du signal $S_{eq}$ équivalent lorsque la vitesse de rotation $\omega$ de la toupie 2 est nulle et $p$ le coefficient de corrélation de ladite régression linéaire. Une moyenne des ratios $\tau_0/S_{eq}(0)$ et $\mu/p$ des différents bétons permet alors de remonter sensiblement aux valeurs $\tau_0$ et $\mu$ à partir des valeurs $S_{eq}(0)$ et $p$. Un exemple de cette approche est illustré dans le tableau de la figure 8.

D'autres approches sont bien évidemment possibles, par exemple par réseaux de neurones sur le signal Sb brut.

L'invention n'est bien entendu pas limitée à ce qui vient d'être décrit, mais englobe au contraire toute variante entrant dans le cadre défini par les revendications.

Bien qu'ici le capteur 3 soit fixé à la paroi 2.2 de la toupie 2 par vissage, il pourrait aussi l'être par rivetage ou par tout autre mode de fixation permettant de solidariser mécaniquement le capteur 3 à la toupie 2 et ainsi former un assemblage rigide.

Bien qu'ici le capot 6 soit fixé à l'extrémité libre du capteur 3 par vissage, il pourrait aussi l'être par rivetage ou par tout autre mode de fixation permettant de solidariser mécaniquement le capot 6 au capteur 3 et ainsi former un assemblage rigide.

Bien qu'ici la connexion entre le capteur 3 et le système 5 d'enregistrement et de traitement de signal soit filaire, elle peut être sans fil ou radio.

Il est entendu que le capteur 3 peut être utilisé avec un récipient rotatif autre qu'une toupie pouvant contenir des substances présentant des caractéristiques rhéologiques autre que le béton B, telles que les fluides pour l'industrie agro-alimentaire, pour l'industrie des peintures, pour l'industrie pétrolière...

De même, le récipient n'est pas nécessairement fourni sur un camion et d'autres types de mélangeurs peuvent être utilisés. Par exemple, le mélangeur peut être un mélangeur industriel, un système de mélange comprenant des mélangeurs à cisaillement élevé, des mélangeurs en ligne ou des agitateurs.

Le traitement des signaux en provenance du capteur peut être par exemple effectué dans une unité de traitement reliée filairement au capteur et située à proximité de celui-ci ou bien dans une unité de traitement déportée et en liaison sans fil avec le capteur.

## Revendications

1. Dispositif (D) pour caractériser une substance (B) mélangée à l'intérieur d'un récipient (2) de telle manière que la substance soit en mouvement relatif de rotation par rapport au récipient, le dispositif comprenant :

   - un capteur (3) d'effort fixé à une paroi (2.2) du récipient (2), le capteur s'étendant à l'intérieur dudit récipient selon un axe (Y) sensiblement normal à ladite paroi, et placé de manière à ce qu'il soit immergé au moins périodiquement dans la substance pendant la rotation ;
   - un capot (6) de protection recouvrant le capteur (3) ;
   - des moyens d'enregistrement et de traitement (5) d'un signal (Sb) délivré par le capteur agencés pour déterminer, à partir du signal, un volume et/ou une variation de composition et/ou au moins une caractéristique rhéologique de la substance ; et
   - des moyens de transmission (4) du signal délivré par le capteur aux moyens d'enregistrement et de traitement (5), **caractérisé en ce que** le capot de protection est fixé exclusivement et de manière immobile à une extrémité libre du capteur de façon à ce que, lors du mouvement relatif de la substance par rapport au récipient, le capot soit soumis à une pression de résistance conférée par la substance et à ce que la pression de résistance soit concentrée sur l'extrémité libre du capteur.

2. Dispositif selon la revendication 1, dans lequel la substance mélangée est un béton ou un mortier (B).

**3.** Dispositif selon la revendication 1 ou 2, dans lequel la caractéristique rhéologique est le seuil d'écoulement et/ou la viscosité.

**4.** Dispositif selon l'une quelconque des revendications précédentes, dans lequel les moyens de transmission (4) du signal comprennent un système de connexion sans fil ou radio.

**5.** Procédé pour caractériser une substance (B) mélangée à l'intérieur d'un récipient (2) de telle manière que la substance soit en mouvement relatif de rotation par rapport au récipient à partir d'un dispositif (D) selon l'une quelconque des revendications précédentes, le procédé comprenant les étapes suivantes :

- enregistrer un signal (*Sb*) délivré par le capteur (3) lors de rotations du récipient (2) ; et
- déterminer un volume et/ou une variation de composition et/ou au moins une caractéristique rhéologique de la substance exclusivement à partir du signal (*Sb*).

**6.** Procédé selon la revendication 5, dans lequel la détermination du volume, de la variation de composition et de la caractéristique rhéologique de la substance comprend un redressement (*Sr*) du signal (*Sb*) brut délivré par le capteur (3) en soustrayant audit signal (*Sb*) un signal (*b*) de base correspondant aux fluctuations d'effort auxquelles est soumis le capteur (3) sous l'effet de son propre poids lorsque le récipient (2) tourne.

**7.** Procédé selon la revendication 6, dans lequel le signal (*b*) de base est déterminé en enregistrant et en analysant le signal (*Sb*) délivré par le capteur (3) lorsque le récipient (2) tourne à vide.

**8.** Procédé selon la revendication 6, dans lequel le signal (*b*) de base est déterminé à partir du signal (*Sb*) brut.

**9.** Procédé selon l'une quelconque des revendications 6 à 8, dans lequel la détermination du volume est déterminée à partir d'un angle ($\alpha_p$) de présence de la substance (B).

**10.** Procédé selon la revendication 9, dans lequel l'angle ($\alpha_p$) de présence est déterminé à partir du signal (*Sr*) redressé ou du signal (*Sb*) brut.

**11.** Procédé selon la revendication 10, dans lequel l'angle ($\alpha_p$) de présence est déterminé à partir d'un temps de présence ($T_p$) du béton (B) extrait du signal (*Sr*) redressé ou du signal (*Sb*) brut.

**12.** Procédé selon la revendication 6, comprenant l'étape de déterminer une variation de composition de la substance en comparant une valeur équivalente ($S_{eq}(t)$) du signal (*Sr*) redressé sur une période (*T*) donnée à une valeur équivalente ($S_{eq}(t+nT)$) du signal redressé sur une période consécutive à la période (*T*) donnée.

**13.** Procédé selon la revendication 12, dans lequel la caractéristique rhéologique de la substance (B) est déterminée en associant, pour un volume de substance (B) donné et pour au moins deux valeurs ($\omega_i$) de vitesse de rotation du récipient (2) ainsi que des valeurs ($S_{eqi}$) du signal ($S_{eq}$) équivalent correspondant, aux couples ($\omega_i$, $S_{eqi}$) des couples (*grad $v_i$*, $\tau_i$), où *grad $v_i$* est le gradient de vitesse et $\tau_i$ la contrainte de cisaillement.

**14.** Procédé selon la revendication 13, dans lequel la caractéristique rhéologique est une viscosité ($\mu$) de la substance (B).

**15.** Procédé selon la revendication 13, dans lequel la caractéristique rhéologique est un seuil d'écoulement ($\tau_0$) de la substance (B).

**Patentansprüche**

**1.** Vorrichtung (D) zur Charakterisierung einer Substanz (B), die im Inneren eines Behälters (2) derart gemischt wird, dass sich die Substanz in einer rotatorischen Relativbewegung in Bezug auf den Behälter befindet, wobei die Vorrichtung umfasst:

- einen Kraftsensor (3), der an einer Wand (2.2) des Behälters (2) befestigt ist, wobei sich der Sensor im Inneren des Behälters entlang einer im Wesentlichen senkrecht zu der Wand verlaufenden Achse (Y) erstreckt und derart platziert ist, dass er während der Drehbewegung zumindest periodisch in die Substanz eingetaucht wird;
- eine Schutzkappe (6), die den Sensor (3) abdeckt;
- Mittel (5) zur Aufzeichnung und Verarbeitung eines von dem Sensor ausgegebenen Signals (Sb), die dafür ausgelegt sind, aus dem Signal ein Volumen und/oder eine Zusammensetzungsveränderung und/oder zumindest eine rheologische Eigenschaft der Substanz zu bestimmen; und
- Mittel (4) zur Übertragung des von dem Sensor ausgegebenen Signals an die Aufzeichnungs- und Verarbeitungsmittel (5), **dadurch gekennzeichnet, dass** die Schutzkappe ausschließlich und unbeweglich an einem freien Ende des Sensors befestigt ist, sodass während der Relativbewegung der Substanz in Bezug auf den Behälter die Kappe einem von der Substanz ausgeübten Widerstandsdruck unterworfen ist und der Widerstandsdruck an dem freien Ende des Sensors konzentriert ist.

2. Vorrichtung nach Anspruch 1, wobei es sich bei der gemischten Substanz um einen Beton oder einen Mörtel (B) handelt.

3. Vorrichtung nach Anspruch 1 oder 2, wobei es sich bei der rheologischen Eigenschaft um die Fließgrenze und/oder um die Viskosität handelt.

4. Vorrichtung nach einem der vorhergehenden Ansprüche, wobei die Mittel (4) zur Übertragung des Signals ein Drahtlos- oder Funkverbindungssystem umfassen.

5. Verfahren, welches ausgehend von einer Vorrichtung (D) nach einem der vorhergehenden Ansprüche dazu dient, eine Substanz (B) zu charakterisieren, die derart im Inneren eines Behälters (2) gemischt wird, dass sie sich in einer rotatorischen Relativbewegung zu dem Behälter befindet, wobei das Verfahren die Schritte umfasst, dass:

   - ein im Zuge von Drehbewegungen des Behälters (2) von dem Sensor (3) ausgegebenes Signal (Sb) aufgezeichnet wird; und
   - ein Volumen und/oder eine Zusammensetzungsveränderung und/oder zumindest eine rheologische Eigenschaft der Substanz ausschließlich aus dem Signal (Sb) bestimmt werden.

6. Verfahren nach Anspruch 5, wobei die Bestimmung des Volumens, der Zusammensetzungsveränderung und der rheologischen Eigenschaft der Substanz eine Gleichrichtung (Sr) des von dem Sensor (3) ausgegebenen Rohsignals (Sb) umfasst, indem von besagtem Signal (Sb) ein Basissignal (b) subtrahiert wird, das den Kraftschwankungen entspricht, denen der Sensor (3) aufgrund seines Eigengewichts während der Drehbewegung des Behälters (2) unterworfen ist.

7. Verfahren nach Anspruch 6, wobei das Basissignal (b) dadurch bestimmt wird, dass das während des Leerbetriebs des Behälters (2) von dem Sensor (3) ausgegebene Signal (Sb) aufgezeichnet und analysiert wird.

8. Verfahren nach Anspruch 6, wobei das Basissignal (b) aus dem Rohsignal (Sb) bestimmt wird.

9. Verfahren nach einem der Ansprüche 6 bis 8, wobei die Volumenbestimmung anhand eines Präsenzerfassungswinkels ($\alpha_p$) der Substanz (B) erfolgt.

10. Verfahren nach Anspruch 9, wobei der Präsenzerfassungswinkel ($\alpha_p$) aus dem gleichgerichteten Signal (Sr) oder aus dem Rohsignal (Sb) bestimmt wird.

11. Verfahren nach Anspruch 10, wobei der Präsenzerfassungswinkel ($\alpha_p$) anhand einer aus dem gleichgerichteten Signal (Sr) oder aus dem Rohsignal (Sb) gewonnenen Präsenzzeit ($T_p$) des Betons (B) bestimmt wird.

12. Verfahren nach Anspruch 6, den Schritt umfassend, dass eine Zusammensetzungsveränderung der Substanz dadurch bestimmt wird, dass ein Äquivalenzwert ($S_{eq}(t)$) des gleichgerichteten Signals (Sr), welcher über einen gegebenen Zeitraums (T) hinweg gewonnen worden ist, mit einem Äquivalenzwert ($S_{eq}(t+nT)$) des gleichgerichteten Signals, welcher über einen auf den gegebenen Zeitraum (T) folgenden Zeitraum hinweg gewonnen worden ist, verglichen wird.

13. Verfahren nach Anspruch 12, wobei die rheologische Eigenschaft der Substanz (B) dadurch bestimmt wird, dass für ein Volumen der Substanz (B) und für zumindest zwei Werte ($\omega_i$) der Drehgeschwindigkeit des Behälters (2) sowie für Werte ($S_{eqi}$) des entsprechenden Äquivalenzsignals ($S_{eq}$), den Paaren ($\omega_i$, $S_{eqi}$) Paare (grad $v_i$, $\tau_i$) zugeordnet werden, wobei grad $v_i$ der Geschwindigkeitsgradient ist und $\tau_i$ die Scherspannung ist.

14. Verfahren nach Anspruch 13, wobei es sich bei der rheologischen Eigenschaft um eine Viskosität ($\mu$) der Substanz (B) handelt.

15. Verfahren nach Anspruch 13, wobei es sich bei der rheologischen Eigenschaft um eine Fließgrenze($\tau_0$) der Substanz (B) handelt.

**Claims**

1. A device (D) for characterising a substance (B) mixed inside a container (2) in such a manner that the substance is in relative rotational movement with respect to the container, the device comprising:

   - a force sensor (3) fixed to a wall (2.2) of the container (2), the sensor extending inside said container along an axis (Y) substantially normal to said wall, and placed in such a way that it is immersed at least periodically in the substance during rotation;
   - a protective cover (6) covering the sensor (3);
   - means (5) for recording and processing a signal (Sb) delivered by the sensor arranged to determine, from the signal, a volume and/or a variation in composition and/or at least one rheological characteristic of the substance; and
- means (4) for transmitting the signal delivered by the sensor to the recording and processing means (5), **characterised in that** the protective cover is fixed exclusively and immovably to a free end of the sensor so that, during the relative movement of the substance with respect to the container, the cover is subjected to a resistance pressure imparted by the substance and so that the resistance pressure is concentrated on the free end of the sensor.

2. The device according to claim 1, wherein the mixed substance is a concrete or mortar (B).

3. The device according to claim 1 or claim 2, wherein the rheological characteristic is the yield point and/or viscosity.

4. The device according to any one of the preceding claims, wherein the signal transmission means (4) comprise a wireless or radio connection system.

5. A method for characterising a substance (B) mixed inside a container (2) in such a way that the substance is in relative rotational movement with respect to the container from a device (D) according to any one of the preceding claims, the method comprising the following steps:

   - recording a signal ($Sb$) delivered by the sensor (3) during rotations of the container (2); and
   - determine a volume and/or a variation in composition and/or at least one rheological characteristic of the substance exclusively from the signal ($Sb$).

6. The method according to claim 5, wherein determining the volume, the variation in composition and the rheological characteristic of the substance comprises rectifying ($Sr$) the raw signal ($Sb$) delivered by the sensor (3) by subtracting from said signal $(Sb)$ a basic signal ($b$) corresponding to the force fluctuations to which the sensor (3) is subjected under the effect of its own weight when the container (2) rotates.

7. The method according to claim 6, wherein the basic signal ($b$) is determined by recording and analysing the signal ($Sb$) delivered by the sensor (3) when the container (2) is running empty.

8. The method according to claim 6, wherein the base signal ($b$) is determined from the raw signal ($Sb$).

9. The method according to any one of claims 6 to 8, wherein the determination of the volume is determined from an angle ($\alpha_p$) of presence of the substance (B).

10. The method according to claim 9, wherein the angle ($\alpha_p$) of presence is determined from the rectified signal ($Sr$) or the raw signal ($Sb$).

11. The method according to claim 10, wherein the angle ($\alpha_p$) of presence is determined from a presence time ($T_P$) of the concrete (B) extracted from the rectified signal ($Sr$) or the raw signal ($Sb$).

12. The method according to claim 6, comprising the step of determining a variation in composition of the substance by comparing an equivalent value ($S_{eq}(t)$) of the rectified signal ($Sr$) over a given period ($T$) with an equivalent value ($S_{eq}(t+nT)$) of the rectified signal over a period following the given period ($T$).

13. The method according to claim 12, wherein the rheological characteristic of the substance (B) is determined by associating to the pairs ($\omega_i$, $S_{eqi}$), for a given volume of substance (B) and for at least two values ($\omega_i$) of the rotation speed of the container (2) as well as values ($S_{eqi}$) of the corresponding equivalent signal ($S_{eq}$), pairs (grad $V_i$, $T_i$), where *grad* $V_i$ is the speed gradient and $\tau_i$ is the shear stress.

14. The method according to claim 13, wherein the rheological characteristic is a viscosity ($\mu$) of the substance (B).

15. The method according to claim 13, wherein the rheological characteristic is a yield point ($T_0$) of the substance (B).

Fig. 1

**Fig. 2**

EP 3 767 274 B1

Fig. 3

**Fig. 4**

**Fig. 5**

EP 3 767 274 B1

**Fig. 6**

## Fig. 7

| τ0 (Pa) | μ (Pa.s) | ω1 = 0,094 $S_{eq}(\omega 1)$ | ω2=1,257 $S_{eq}(\omega 2)$ | $S_{eq}(0)$ | p | ratio μ/p | ratio τ0/$S_{eq}(0)$ |
|---------|----------|------------|------------|------------|------|-----------|------------|
| 637,90 | 13,60 | 1,76 | 7,77 | 7,28 | 5,17 | **2,63** | 87,57 |
| 353,20 | 4,20 | 1,02 | 3,10 | 2,94 | 1,79 | **2,34** | 120,33 |
| 1292,10 | 9,40 | 3,53 | 9,29 | 8,83 | 4,96 | **1,90** | 146,38 |
| 760,70 | 4,40 | 2,13 | 4,40 | 4,21 | 1,95 | **2,26** | 180,58 |
| 524,40 | 8,00 | 1,48 | 5,44 | 5,11 | 3,40 | **2,35** | 102,53 |
| 370,30 | 8,20 | 1,09 | 5,08 | 4,76 | 3,43 | **2,39** | 77,87 |
| 90,70 | 2,60 | 0,29 | 1,60 | 1,49 | 1,12 | **2,31** | 60,87 |
| 811,60 | 13,30 | 2,32 | 9,08 | 8,54 | 5,82 | **2,29** | 95,09 |
| 637,90 | 13,60 | 1,84 | 9,06 | 8,47 | 6,21 | **2,19** | 75,31 |
| 401,00 | 2,80 | 1,11 | 2,77 | 2,63 | 1,43 | **1,96** | 152,32 |
| | | | | | *moyenne* | **2,26** | 109,88 |

## Fig. 8

# EP 3 767 274 B1

## RÉFÉRENCES CITÉES DANS LA DESCRIPTION

**Documents brevets cités dans la description**

- US 2017108421 A